# EUROPEAN PATENT SPECIFICATION

(11) **EP 3 513 052 B1**
(45) Date of publication and mention of the grant of the patent: **01.07.2020**
(21) Application number: 17764618.9
(22) Date of filing: 14.09.2017
(51) Int. Cl.: F02M 21/02, F02M 25/022, F02M 25/038

(54) **INWARD INJECTOR FOR DIRECT INJECTION OF A GASEOUS FUEL**
NACH INNEN ÖFFNENDER INJEKTOR ZUR DIREKTEINSPRITZUNG EINES GASFÖRMIGEN BRENNSTOFFS
INJECTEUR OUVRANT VERS L'INTÉRIEUR PERMETTANT L'INJECTION DIRECTE D'UN COMBUSTIBLE GAZEUX

(30) Priority: 14.09.2016 EP 16188755
(43) Date of publication of application: 24.07.2019
(73) Proprietor: Global Design Technology - GDTech SA, 4432 Alleur (BE); Herbillon, Gilles, 4540 Jehay (BE)
(72) Inventor: HERBILLON, Gilles, 4540 Jehay (BE)
(74) Representative: Pronovem
(86) International application number: PCT/EP2017/073099
(87) International publication number: WO 2018/050731

(56) References cited:
- EP-A1- 2 314 854
- DE-A1-102008 001 017
- US-B1- 6 508 418

## Description

### Technical Field

The present invention relates to fuel injectors for supplying fuel to a fuel consuming device, and more particularly to fuel injectors for supplying a gaseous fuel to an internal combustion engine or any other application (such as fuel cells) using fuels in gaseous state such as methane, natural gas, hydrogen, supercritical or gaseous-state water or any mixture thereof in gaseous state.

The present invention also relates to fuel injectors for supplying water in supercritical conditions.

### Background of the Invention

One type of fuel that is used in power internal combustion engines and other fuel consuming devices is a gaseous fuel such as:
- natural gas in the form of compressed natural gas (CNG), or in the form of liquefied natural gas (LNG),
- biogas,
- propane/butane mixtures or liquefied petroleum gas (LPG),
- hydrogen (compressed H₂),
- hydrogen related mixtures (hythane®) or
- supercritical water.

Power thermal combustion engine can be positive-ignition (or spark-ignition) engines or compression-ignition engines.

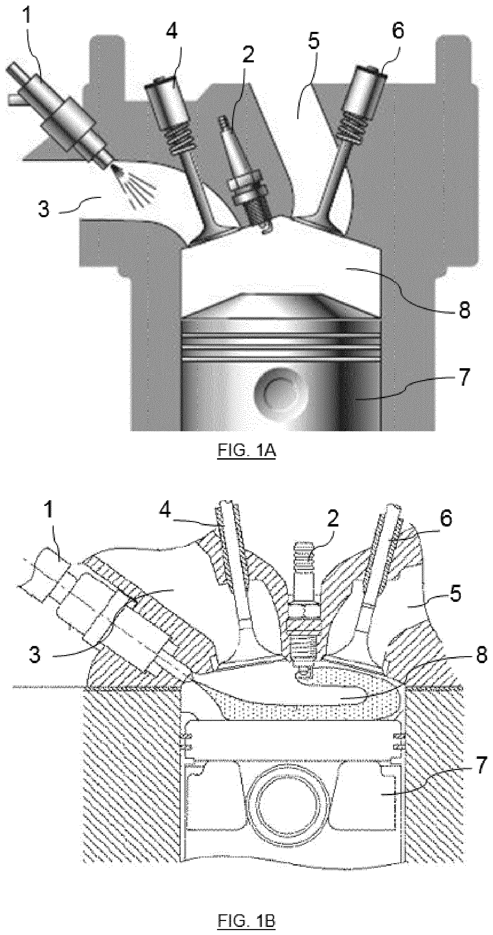

Two types of injection configurations are existing, as shown on FIG. 1A and FIG. 1B respectively, and commonly called as:
- port-fuel injection (PFI), where the fuel is injected by the injector 1 into an air intake manifold 3 upstream air intake valve(s) 4,
- direct injection (DI), where the fuel is directly injected by the injector 1 into the combustion chamber 8.
More thermic constraints are to be expected in direct injection engines (temperature typically up to 300°C) than in indirect injection engines (temperature typically from 25 to 50°C).

Injectors can be of two different types :
- in an outward injector, when the valve opens, i.e. when the valve member is disengaging from the valve seat, the needle or plunger connected to the valve member moves downwards, outside the injector body ;
- in an inward injector, when the valve opens, i.e. when the valve member is disengaging from the valve seat, the needle or plunger connected to the valve member moves upwards, inside the injector body.

In the case of diesel engines, only the DI configuration allows to reach Euro 6 standard. Some challenges linked to the development of the diesel injectors have been solved :
- these injectors operate at high pressure levels (up to 2500 bar) allowing to reach high density of fuel,
- the piezo actuators allow very small strokes,
- the diesel crossing the injector to feed the engine also allows the lubrication of the mobile parts, allowing for a long durability.

Euro 6 standard-compliant diesel engines are mainly operating in lean-burn mode, while a stoichiometric operation is only required to clean-up after-treatment devices. All diesel DI-injectors are inward-type.

In the case of gasoline engines, DI engines were introduced on the market in 1998, but PFI engines are still under production and are still complying with Euro 6 regulation. DI injection systems are more expensive, and were first introduced on premium models.

Some challenges linked to the development of the gasoline injectors have been solved:
- these injectors operate at moderate pressure levels (up to 200-250 bar),
- the gasoline crossing the injector to feed the engine also allows the lubrication of the mobile parts, allowing for a long durability.

Euro 6 standard-compliant gasoline engines are mainly operating in stoichiometric mode, while a rich mode operation is required to clean-up after-treatment devices or to cool down the exhaust manifold.

Since 2014, some premium engines have been now released allowing a lean-burn operation, but require specific deNOx systems such as EGR, NSR or SCR devices. All gasoline DI-injectors are inward type.

In the case of gaseous fuel engines, 100% of the engines released on the market in 2016 are still in the configuration PFI-CNG, they are only working in stoichiometric operation, and the gas is injected at very low pressure levels :
- 1-3 bar for natural aspiration engines,
- 3-12 bar for turbo-charged engines.

The PFI-CNG injector technology is well-known, and reliable. Most of the injectors are commercialized by multinational companies and generally comprise a solenoid actuator and a valve seat made of rubber or any other elastomers.

Compared to PFI-CNG technologies, the DI-CNG must satisfy additional requirements:
- A first constraint is temperature resistance. The valve seat components must be temperature resistant, up to the stationary temperature of the engine head (generally assumed to be 250-300°C). This means that rubber or elastomers valve seats, massively used for PFI-CNG injectors, cannot be considered anymore.
- A second constraint is counter-pressure resistance. The injector must be kept closed when the peak of combustion occurs (120 bar for spark-ignition engine, and 160 bar for compression-ignition engines). This means that for inward injector type, a counter-pressure spring brings an additional force that the actuator must face. For PFI injectors, the counter-pressure spring must only provide a force equivalent to the air pressure in the air intake manifold (max 2.5 bar abs).
- A third constraint is that higher pressure levels are required to reach sonic conditions at the injector critical area, in order to allow a sonic flow to be established between the rail, and the pressure under formation inside the combustion chamber. The final pressure level is a compromise between the sonic concern, and the minimum pressure of gas that must be kept inside the tank, below which it will not be possible anymore to run the engine until full load. Usually, the minimum pressure level in the tank is fixed at 20 bar.

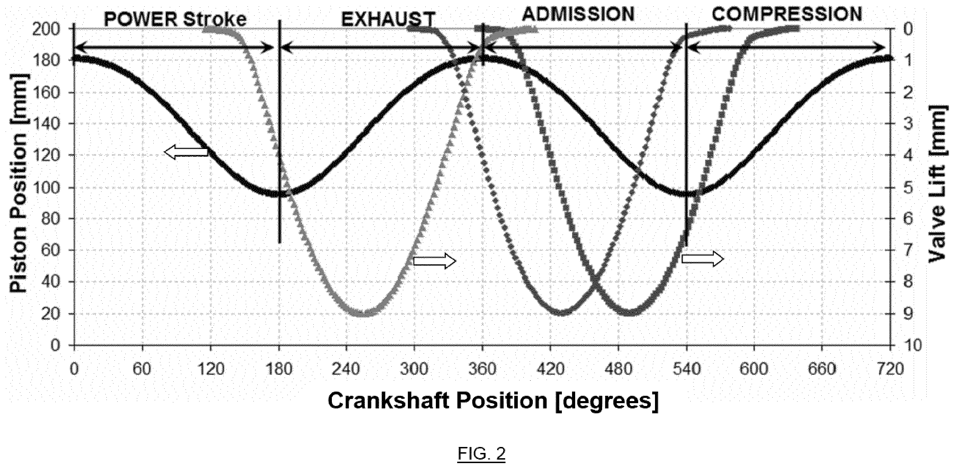

This means that for inward injector types, the force that the actuator has to deliver is higher than for PFI injectors. For these two reasons, the actuator size must be bigger than for PFI-CNG.
- A fourth constraint is gas diffusion. In the case of a PFI-CNG configuration, air and gas are mixed prior to crossing the engine air intake valves when air-intake valves are opened. The mixture is already homogeneous at IVC (Intake Valve Closing), and then at the ignition time. The nozzle end of a PFI-CNG injector does not need a special care during the design phase. In the case of a DI-CNG configuration, only air is mixed across the air intake valves, and the nozzle head of the injector (irrespective of the injector type, inward or outward) must be designed in order to allow an homogeneous diffusion of the gas in the combustion chamber.
- A fifth constraint is related to the injection windows. In the case of a PFI-CNG configuration, the gas can be injected during the 4 strokes of the engine (admission, compression, ignition, exhaust - see FIG. 2), even during intake valves closing (where the gas is "stored" in the intake manifold, waiting for the opening of the intake valve). In the case of a DI-CNG configuration, the gas can be injected during 2 strokes (admission and part of the compression stroke, since the ignition usually occurs at 0 to 20 cranckshaft angle degree before the top dead center (TDC).

The restricted injection timing in DI-CNG (vs. PFI-CNG) means that the flow section must be oversized by factor 2 for a DI-CNG, compared to PFI-CNG, in order to inject a same amount of fuel during a restricted time. The counter-pressure force delivered by the spring, and the force delivered by the fluid are both proportional to the square of the flow section, and the actuator must deliver the sum of these two forces in order to get the injector opened in the case of an inward injector (in the case of an outward injector, only the force of the fluid must be taken into account).

Two types of injection can still be distinguished in DI-CNG according to the injection timing :
- homogeneous injection occurs when the fuel is injected during the air-intake stroke,
- stratified injection occurs when the fuel is injected during the compression stroke.
An actual injection windows can be a mix of homogeneous and stratified injection : the beginning of the injection occurs during the air intake stroke, while the end of the injection occurs during the compression stroke.

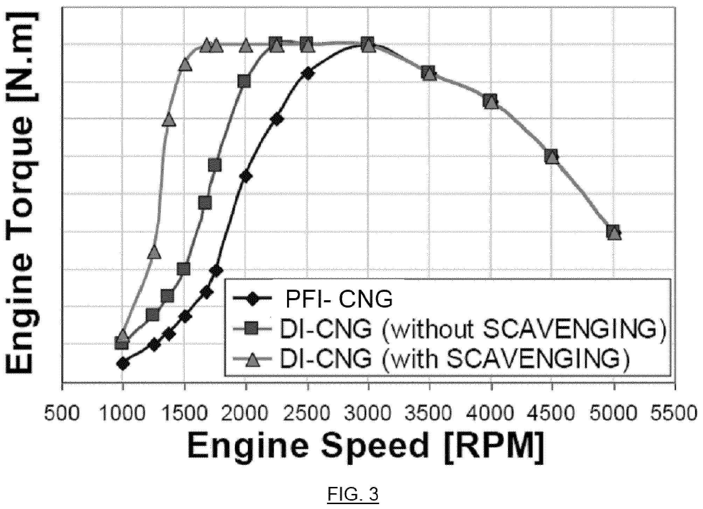

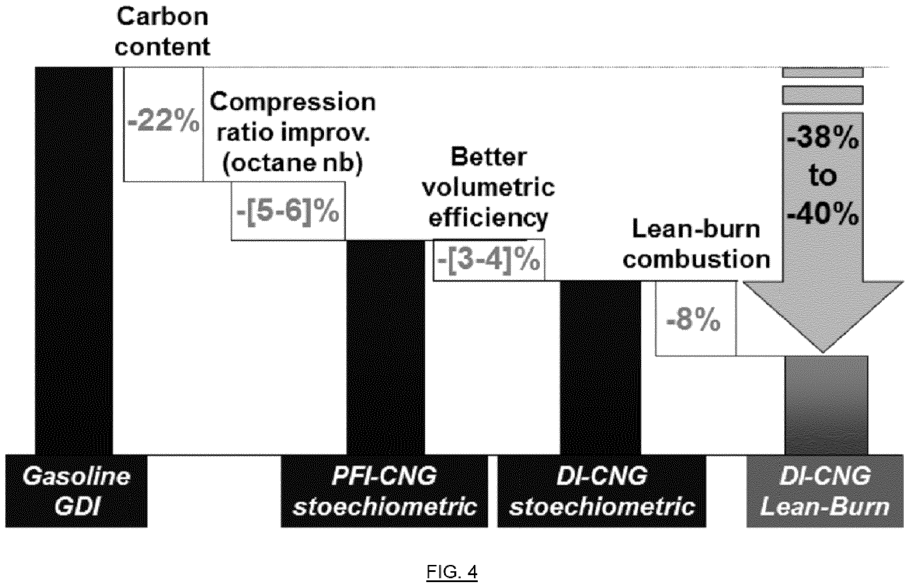

The development of DI engines for gaseous fuels (DI-CNG or DI-CH2) could bring two major benefits with regards to the engine operation (in comparison with PFI-CNG):
- an improvement of the engine low-end torque, thanks to an improvement of the engine volumetric efficiency (see FIG. 3), but this requires to inject the gas during part of the compression stroke, so that not to replace the intake air with gas, and then reduce the engine capacity, and inject it to higher pressure levels (as the max level available is the pressure of the CNG tanks - 250 bar max, and as mass production CNG pumps for such application are not currently available on the market) ;
- an optimized operation of the engine in lean-burn conditions, that would only be possible in DI configuration, and would allow to drastically improve the specific fuel consumption (see FIG. 4).

Three major problems appear in the design of a DI injector operating with gaseous fuels, instead of a DI injector operating with liquid fuels such as gasoline or diesel.

Firstly, the lubrication coefficient of gases, which is smaller than for conventional fuels, cannot fully guarantee the lubrication of the injector. So, innovative designs are required to guarantee the durability of the injector, which is generally 380 millions apertures along the lifetime of the injector for passenger cars engines, and 500 millions to 2 billions apertures along the lifetime of a truck engine.

Secondly, the sealing performances are more difficult to achieve because:
- firstly, the molar mass of gaseous molecules is smaller,
- secondly, the volume flow rate is higher than with conventional liquid fuel, because of a lower pressure level, requesting for a larger flow section, and then further for a larger sealing contact area.

Finally, the diffusion of the fuel stream is more difficult to control because of the higher volume flow rate, due to lower pressure levels, than with conventional fuels. The gas must be injected within wider injection time windows than for conventional fuels. This requires specific nozzle head shapes, in order to control the constant progression of the gas cloud, and in order to achieve a compact homogeneous cloud. If the cloud shape is not homogeneous, the flame will not propagate, and part of the fuel will not be burned, leading to excessive methane (CH₄) emissions at the exhaust pipe.

A variety of nozzle heads are known in prior art in conjunction with liquid fuel injection, that would lead to wrong gas diffusion. For example in the simple configuration of axial flow, without swirl and with a diffusion angle of 20°, the gas path is rectilinear and there is therefore very bad mixture of gas with air. Another common configuration of nozzle head usually intended to properly break up liquid in small droplets, with a plurality of injection holes (e.g. 10 holes, orientation angle : 60° and hole diameter 0.7 mm). In this latter case, simulations show the existence of several lobes of gas indicating a poor mixture with air. The drawback is that the flame is ignited only on one gas lobe without propagating to the other lobes.

At last, as far as injection of water in supercritical conditions is concerned as mentioned above, two possible applications can be cited :
- injection of water in diesel engines (charging-air humidification or water injection in cylinders) : the gaseous water is added to the intake air (either injected in the intake manifold, or injected directly in the combustion chamber). This allows a reduction of the combustion temperature, and further a reduction of NOx at the outlet of the engine ;
- gaseification of biomass or liquid fuels with supercritical water. This concept can be considered for :
   o hydrogen fuel cells (on-board creation of hydrogen from conventional liquid fuels in order to circumvent the lack of hydrogen supply network) ;
   o methane-powered applications.

### Prior Art

Some of the above-listed problems concerning the (inward) injectors for gas-operated internal combustion engines have already been addressed to some extent by the prior art.

For example, a concept of (double) sealing has been explored in US20150267659, DE102014212562, DE102013222030, US20150292440, US20150267648, US20150204276, DE102013222025, DE102012211573, EP2354519, DE102008059865, WO201029777, DE102007004870.

The concept of nozzle head with improved diffusion has been explored for example in JP2015078625, WO200805491, DE102005019314, WO200212720, EP1108885, US6422488, EP704620.

The concept of improved needle guiding has been explored for example in JP5639426, EP2354519, DE102008059865, EP1750005, US20030230649, JP09242615.

In US 6 508 418 B1, an electromagnetically actuable fuel injector for an internal combustion engine is disclosed having an outer housing, a fuel inlet connector positioned in the upper end portion of the outer housing for reception of fuel therein, and an armature having a valve needle attached thereto and positioned adjacent the fuel inlet connector and spaced therefrom by a working gap. The armature defines a generally elongated central opening to receive fuel flow from the fuel inlet connector and has valve needle attached thereto which interacts with a fixed valve having a fixed valve seat associated with the housing to selectively permit fuel to flow through a valve aperture associated with the fixed valve seat. The fuel inlet connector has a fuel outlet end facing a fuel inlet end of the armature and includes a plurality of radially extending raised pads separated by a corresponding plurality of radially extending recessed portions to reduce the contact area between the fuel inlet connector and the armature when the armature is moved upwardly, and to promote fuel flow transversely across the working gap therebetween to establish a first fuel flow path outside of the armature. The first fuel flow path prevents contaminants from accumulating in the working gap. The armature includes at least one first aperture extending through a wall portion thereof for receiving fuel flow from the generally elongated central opening and for directing the fuel flow to a second flow path toward the fixed valve seat. At least one-second aperture extends through a wall portion of the armature and extends at a generally acute angle relative to the longitudinal axis to establish a third fuel flow path toward the fixed valve seat. The size, orientation and numbers of the apertures can be varied to achieve predetermined flow conditions. A method of directing fuel through an injector is also disclosed although the fuel injector and method disclosed utilize gaseous fuels, all types of fuels are contemplated.

Document DE 10 2008 001 017 A1 discloses a valve for controlling a fluid, in particular a gas, having an anchor with two guidance areas, where both guidance areas are formed in a cylindrical manner. A valve seat is provided, where the anchor releases and locks a passage, where the guidance areas of the anchor are controlled in a case. The guidance areas have certain diameters (D1, D2), where the latter diameter (D2) is smaller than the former diameter (D1), to permit an easy tilting of the anchor to open the valve. An independent claim is included for a method for opening a gas injecting valve.

### Aims of the Invention

The present invention aims at providing an inward gas injector which overcomes the drawbacks of prior art.

More particularly the present invention aims at providing an inward gas injector showing high durability, low internal leakage and having a nozzle head with low dead volume and allowing to get a highly homogeneous fuel-air mixture.

### Summary of the Invention

The injector concept according to the present invention brings efficient solutions to the three problems enumerated above.

### Solution to the problem of guaranteeing injector durability targets with low viscosity gaseous fuels

The material used for the needle and the actuator are usually made of same or similar materials such as similar stainless steels. Two materials of same macro-structure are submitted to abrasive wear when rubbed against each other under a low viscosity media. However the selection of two materials with different structures is not convenient, mainly for cost and logistic reasons. Therefore, appropriate designs must be considered in order to avoid the contact between these two parts of same/similar materials.

Maintaining a gap between the actuator (solenoid) and the needle would smoothly affect the actuator lifting force delivered by the actuator and would thus be an acceptable solution.

The design introduced according to the present invention involves three sub-components of the injector, a coil, a needle and a bushing.

The bushing made of another material than stainless steel, such as copper, bronze, PTFE or any other material, advantageously permits accurate guidance of the needle or plunger, i.e. the mobile part of the actuator. The clearance between the needle and the bushing must be lower than the clearance between the needle and the coil, i.e. the fixed part of the actuator, in order to allow the needle to move inside the coil without contact. This is a first security against the risk of abrasion.

In case of an undesired contact between the needle and the coil, which could potentially occur at the end of the life time of the injector, for example in case of excessive wear of the bushing, the design should also allow to reduce the friction area between the needle and the coil, which is a second security against the risk of abrasion. The plunger is indented, which means that 2 diameters are machined on the portion of the needle moving inside the coil:
- two external sections of larger diameter and
- one middle section of smaller diameter.

### Solution to the problem of sealing

According to the present invention, the leakage is guaranteed by two and even three sealing systems, instead of one:
- by a "radial sealing": when the injector is actuated, radial holes in the plunger of the injector will match radial grooves located in the copper bushing. The clearance between the plunger and the bushing is small enough to guarantee a perfect sealing ;
- by a "ball-cone" valve assembly located downstream the injector, as a first and main axial sealing ;
- by a second axial sealing obtained thanks to the contact between the needle and an elastomer or polymer seal, getting into deformation when the injector is closed.

### Solution to the problem of guaranteeing an homogeneous mixing of the mixture "air-CNG" inside the combustion chamber (during a shortened injection timing than in PFI-CNG).

According to the invention, an homogeneous mixing is guaranteed by an appropriate nozzle head inward design :
- the nozzle head design is supported by CFD (computational fluid dynamics) simulation, and further manufactured by 3D-layer manufacturing,
- an "outward injector" only allows a "cone-shaped" gas stream, while such a 3D-nozzle heads allows a perfect tuning of the stream for example with double-cones or triples-cones designs, in order to achieve a much better homogeneous stream,
- the main nozzle-part can be used with interchangeable nozzle heads (due to separation of the functions valve seat/nozzle head).

In the frame of the present invention, three families of nozzle heads have been considered in the case of DI injectors operating with gaseous fuel in order to improve air-fuel gaseous mixing :
- multi-holes nozzle head based on an inward injection concept:
   ∘ 3 existing types: "cone", "crescent" or "fan" types,
   ∘ limits: the number of holes is limited (i) due to machining techniques, and (ii) in order to prevent an increasing tendency towards coking (or soot clogging).
   ∘ major disadvantage: the limited number of holes creates an inadequate atomisation quality. It is only possible to establish a partially homogeneous mixture around the spark plug, because enriched-mixture zones are adjacent to lean-mixture zones. The origin of the ignition is random and the flam progression is not uniform. As a main result, the heterogeneous mixture combustion leads to CO and THC (total hydrocarbon) generation.
- swirl nozzle head based on an inward injector concept:
   ∘ limits: the swirl-based nozzle manufacturing process relies on 3D-printing (expensive, and complex),
   ∘ main benefit: the swirl allows to slow down the fuel flow in order to keep the mixture around the spark plug, and could prevent wall-wetting,
   ∘ major disadvantage: the swirl is linked to the quantity of fuel, and to the fuel pressure.
- cone, bi-cone or tri-cone nozzle head based on an inward injector concept:
   ∘ 3 types: conical, bi-conical, or tri conical,
   ∘ major advantage: able to produce one or two uniforms hollow cones, not affected by the pressure in the chamber (as soon as sonic conditions are established).
This last solution of multi-cones nozzle heads and their variants has been preferably retained for designing the embodiments of the present invention.

Some design criteria must also be respected :
- a ratio of 2:1 to 5:1 must be considered between the flow section at the nozzle inlet, and the flow section at the nozzle outlet, in order to allow a sufficient guiding of the fuel when released in the combustion chamber,
- the dead volume of the nozzle head must be reduced as much as possible, considering the risk that the gas kept inside this dead volume could not be ignited, and directly released at the engine exhaust, resulting in a significant increase of the THC engine emissions.

### Solution of the problem of dead volume reduction

The main drawback of the "inward" injector type is that the "dead volume", i.e. the volume located downstream the injector (see above), is a source of unburned methane emission. The dead volume is higher for an inward injector than for an outward injector. According to the invention, the nozzle internal channels widths are optimized in ordered to reduce the dead volume with a suitable adjustment of flow channels axial separation walls. The 3D-layer manufacturing practically remains the only way to manufacture these parts.

According to the invention, an inward gas injector for direct injection of a gaseous fuel into a combustion chamber of an internal combustion engine or a fuel cell is disclosed. The injector according to the invention comprises a housing or injector body having a hollow nozzle for containing a gas under pressure and ended by a nozzle head, said nozzle head having a valve seat communicating with the exterior by an exit having at least one exit channel and a gas diffusion angle, a mobile valve member connected to a needle actuated by a coil concentric with the hollow part of the nozzle, said needle being therefore able to slide within the nozzle, said valve member cooperating with the valve seat to open or close the valve, and guiding means for guiding the sliding of the needle in the nozzle. Said guiding means comprise a first contact portion between the needle and a bushing of the nozzle, and a second contact portion between the needle and the nozzle at the level of a portion of the coil, so that the clearance between the needle and the nozzle at said first contact portion is 4 to 8 times lower than the clearance between the needle and the nozzle at said second contact portion, a first longitudinal sealing of the valve is ensured by the valve member contacting the valve seat, wherein a second radial sealing of the valve is ensured by a plurality of orifices or needle slots made in a portion of the needle, said portion of the needle being hollow and containing the gas under pressure, said plurality of orifices or needle slots cooperating with a plurality of slots made in the bushing, so that, when the valve member is in contact with the valve seat, the orifices, the needle slots respectively, do not match the bushing slots, leading to a radial sealing and when the valve member is not in contact with the valve seat, at least part of the orifices, the needle slots respectively, do match the bushing slots, leading to a flow of gas to the exterior of the injector through a channel connecting the bushing slots and the exit of the nozzle head.

According to some embodiments, the inward gas injector has further one of the following characteristics or a suitable combination thereof:
- the needle is made of stainless steel and the bushing is made of a copper alloy ;
- said valve member is a ball and said valve seat has a conical surface ;
- said plurality of orifices or needle slots are disposed in rows perpendicular to the axis of the nozzle ;
- the portion of the needle in contact with the nozzle at the first contact portion and the portion of the needle in contact with the nozzle at the second contact portion are each cylindrical parts comprising a central area having a first diameter bordered by two external areas having each a same second diameter, said first diameter being lower than said second diameter;
- said nozzle head is interchangeable and has an exit to the exterior of the nozzle comprising a plurality of exit channels forming an envelope gas diffusion angle ;
- the exit channels of the nozzle head are apportioned according to one or more cones, said exit channels belonging to a same cone being separated by channel interruptions ;
- said nozzle head is CFD-simulated and further manufactured by 3D-layer manufacturing ;
- the channels of the nozzle head are apportioned according to 2 or 3 coaxial cones ;
- the nozzle head further comprises an axial channel ;
- a third sealing of the valve is ensured by an elastomer or polymer seal located between the valve seat and a horizontal surface of the needle, so as the elastomer or polymer seal gets into deformation when contacting the horizontal surface of the needle when the injector is closed ;
- the ball is disposed free to move inside the needle in order to prevent wear when the ball enters into contact with the valve seat when the injector is closed.

Another aspect of the present invention concerns a gas-operated internal combustion engine or a fuel cell, comprising an inward gas injector as described above.

### Brief Description of the Drawings

FIG. 1A represents an example of compressed natural gas port-fuel injection (PFI-CNG) design while FIG. 1B represents an example of compressed natural gas direct injection (DI-CNG).
FIG. 2 represents an example with the intake and exhaust valve timings for a base engine, with the piston position and the valve lift in function of the crankshaft position.
FIG. 3 graphically represents full load torque curve comparison for PFI-CNG and DI-CNG (scavenging: intake and exhaust valve overlap for engine performance enhancement).
FIG. 4 graphically represents CO2 breakdown for a series of technologies going from GDI (Gasoline Direct Injection) to DI-CNG.
FIG. 5 shows typical outlook for a DI gaseous fuel injector (without clamping parts).
FIG. 6 shows a detailed design for an embodiment of a injector according to the present invention, showing the portion of the needle in contact with the coil and the portion of the needle in contact with the bushing, each contact part showing an indentation, as well as the portion of the coil in contact with the needle.
FIG. 7 shows the contact between the needle and the bushing and the clearance between the needle and the coil.
FIG. 8 is a perspective view of a general embodiment for a bushing and a needle of a gaseous injector according to the present invention.
FIG. 9A and FIG. 9B are cross-sectional views of an gaseous injector according to a first embodiment of the present invention, only with axial sealing, respectively in closed and opened position.
FIG. 10A and FIG. 10B are cross-sectional views of an gaseous injector according to a second embodiment of the present invention, with axial and radial sealing with holes option, respectively in closed and opened position.
FIG. 11A and FIG. 11B are cross-sectional views of an gaseous injector according to a third embodiment of the present invention, with axial and radial sealing with slots option, respectively in closed and opened position.
FIG. 12 is a perspective view of the bushing and of the needle of a gaseous injector according to the second embodiment of the present invention.
FIG. 13 is a perspective view of the bushing and of the needle of a gaseous injector according to the third embodiment of the present invention.
FIG. 14A and FIG. 14B are cross sectional views of a gaseous injector according to a first embodiment of the present invention showing a third sealing, respectively open and closed position.
FIG. 15A and FIG. 15B are cross sectional views of a gaseous injector according to a second embodiment of the present invention showing a third sealing, respectively open and closed position.
FIG. 16 is a detailed view showing the use of hydrostatic pressure to keep the seal in position, in the variant of FIG. 15A and 15B.

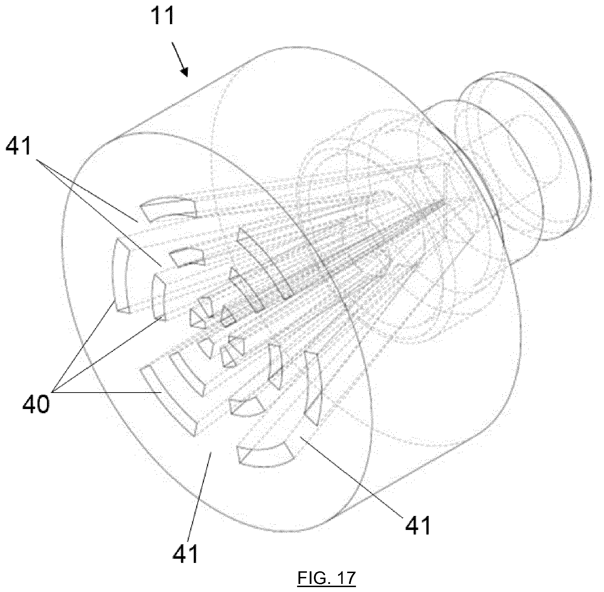

FIG. 17 is a perspective view of an embodiment for a multi-cone nozzle head according to the present invention.

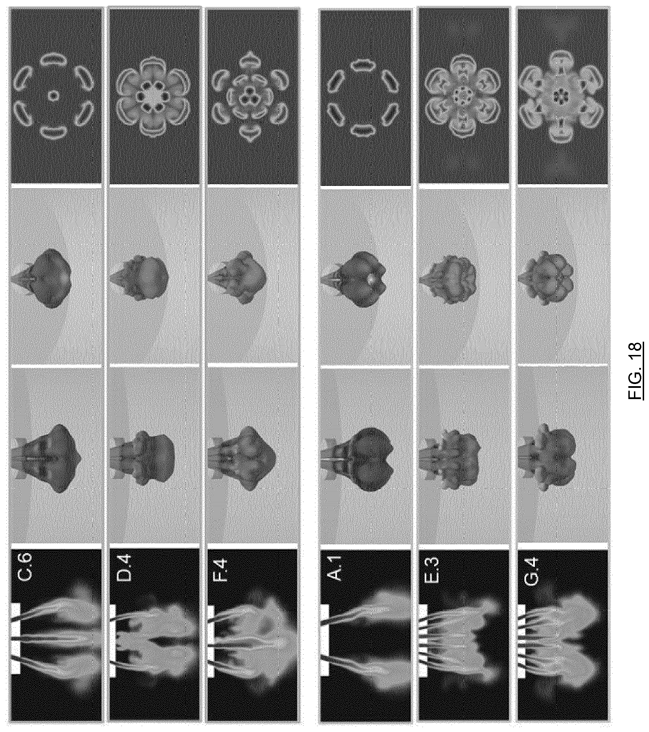

FIG. 18 shows diffusion simulations for a series of single-and multi-cones nozzle head designs according to the present invention.

### Description of Preferred Embodiments of the Invention

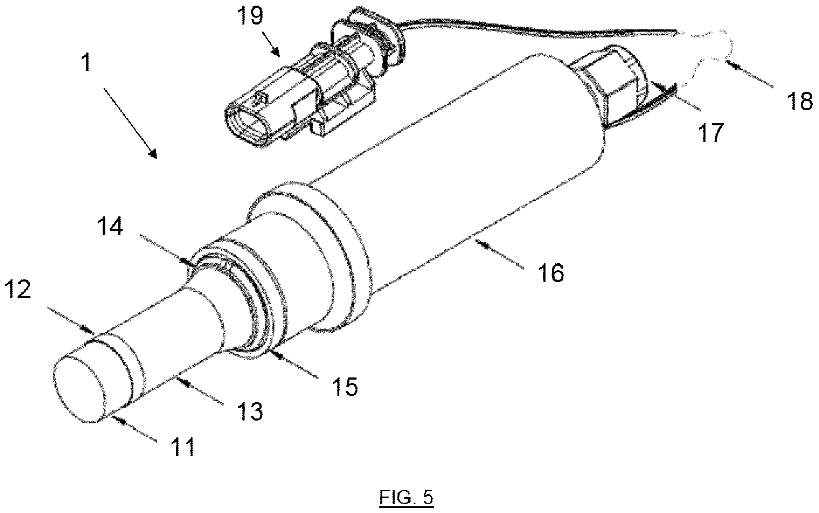

Different views of a gaseous DI injector 1 according to particular embodiments of the present invention are shown in FIG. 5 to 8. A mobile part, which is essentially cylindrical, is called needle or plunger 20. This mobile part is designed to be movable within a fixed tubular part containing an electric actuator, the solenoid or coil 16. The needle 20 is able to move within the nozzle 13 and to abut against a seat valve, which belongs to a fixed nozzle head 11. In order to prevent leaks during operation, especially when the valve is closed, the joint between the nozzle 13 and the nozzle head 11 is provided by a nozzle seal 12.

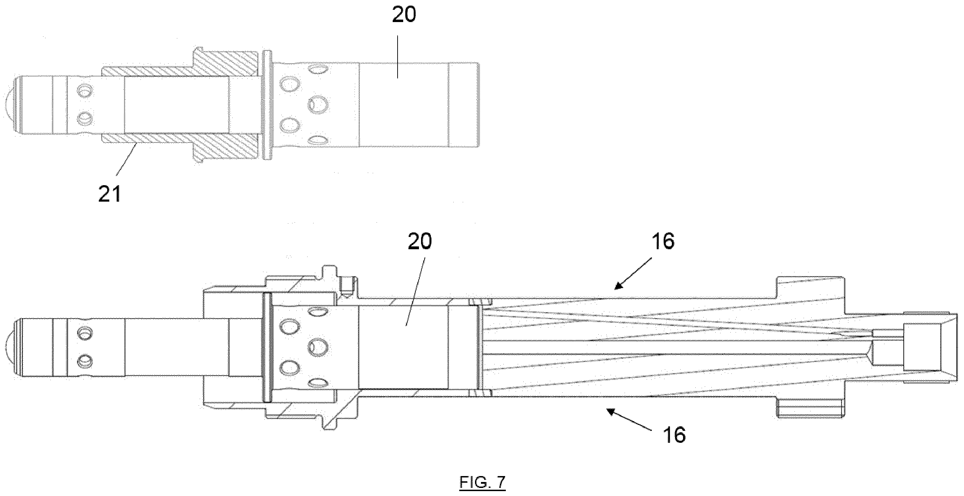

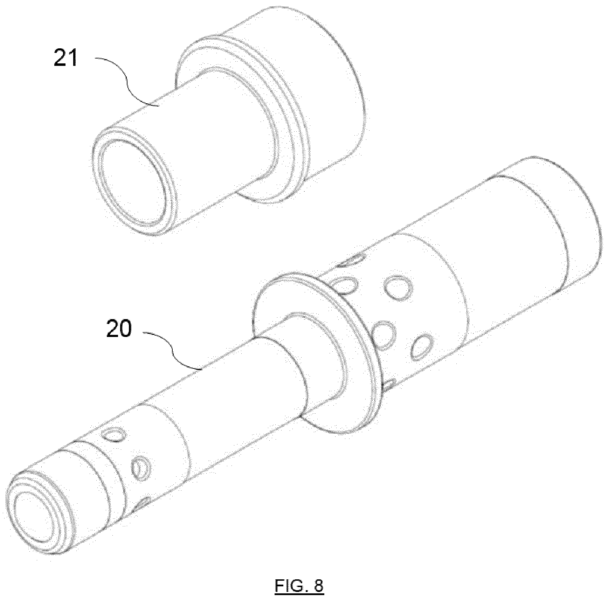

In order to provide accurate guiding of the needle and durability of the nozzle, as discussed above, accurate guiding of the needle 20 within the fixed part of the nozzle 13, 16, a guide bushing or guide bearing 21 is provided, which is contacting a first portion of the needle 22 (see FIG. 7 and 8). The material of the bushing 21 is different of the material of the needle, which is usually made of stainless steel. A second portion of the needle 23 is in contact with a corresponding portion of the coil support 24. Preferably the bushing is made of copper or an alloy thereof such as bronze, brass or similar material.

According to the invention, the clearance between the bushing and the first portion of the needle is lower than the clearance between the second portion of the needle and the coil (not shown). According to en embodiment, the clearance between the bushing and the first portion of the needle is 4 to 8 times lower than the clearance between the second portion of the needle and the coil (for example 0.01-0.02 mm vs. 0.07-0.08 mm).

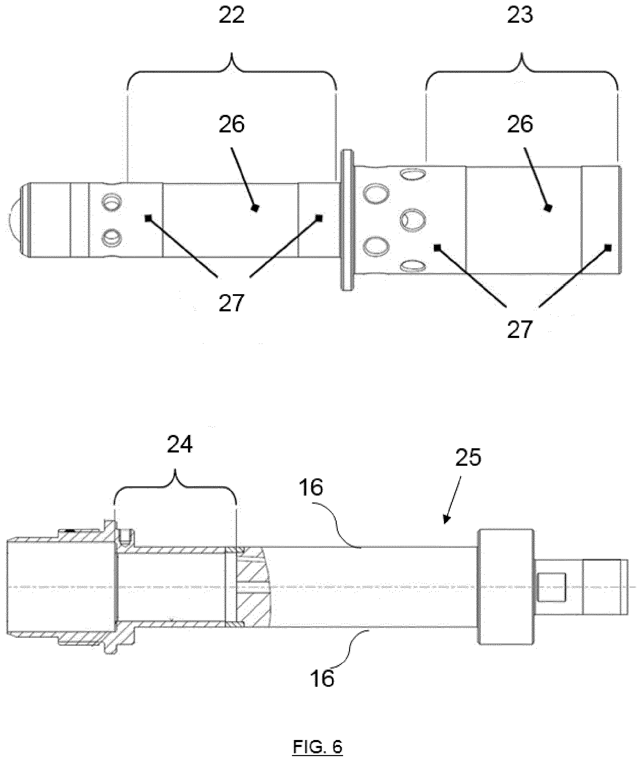

According to a preferred embodiment, the external area of the first portion of the needle in contact with the bushing and the external area of the second portion of the needle in contact with the coil have both a middle area 26 of smaller diameter bordered by two external areas 27 of higher diameter (see FIG. 6).

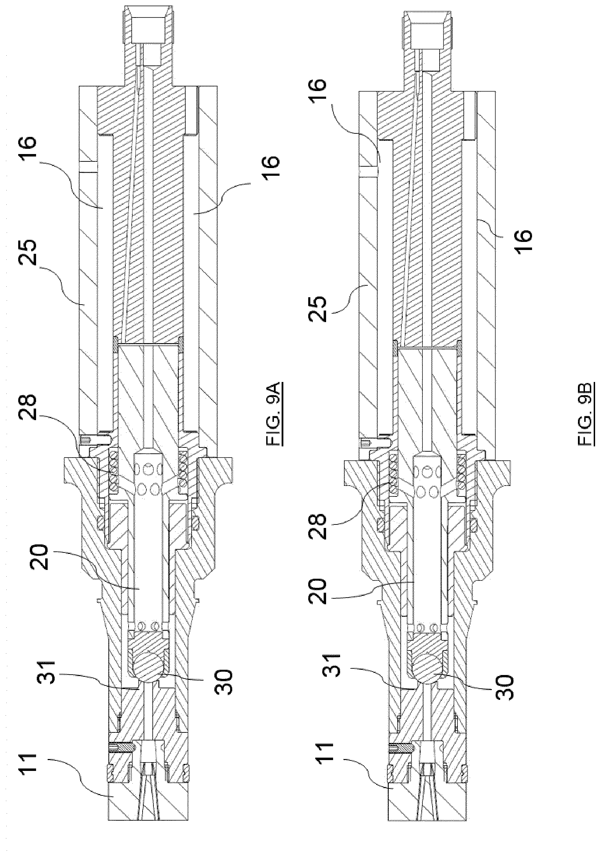

As far as the sealing of the needle within the fixed nozzle body is concerned, according to some embodiments depicted in FIG. 9A and 9B, a first sealing is provided by a cone-ball assembly located axially in the injector and making the valve member/valve seat assembly. In order to close the valve, coil 16 exerts a force on the needle 20, against the return force of spring 28, so that the ball 30 located at the extremity of the needle abuts against the seat 31which belongs to the fixed part 25 of the injector or to the nozzle head (11).

When the force exerted by the actuator is released, the return force of the spring 28 pushes the ball 30 away from the seat 31, which opens the valve and liberates the injector fluid towards the nozzle head 11 and further towards the combustion chamber.

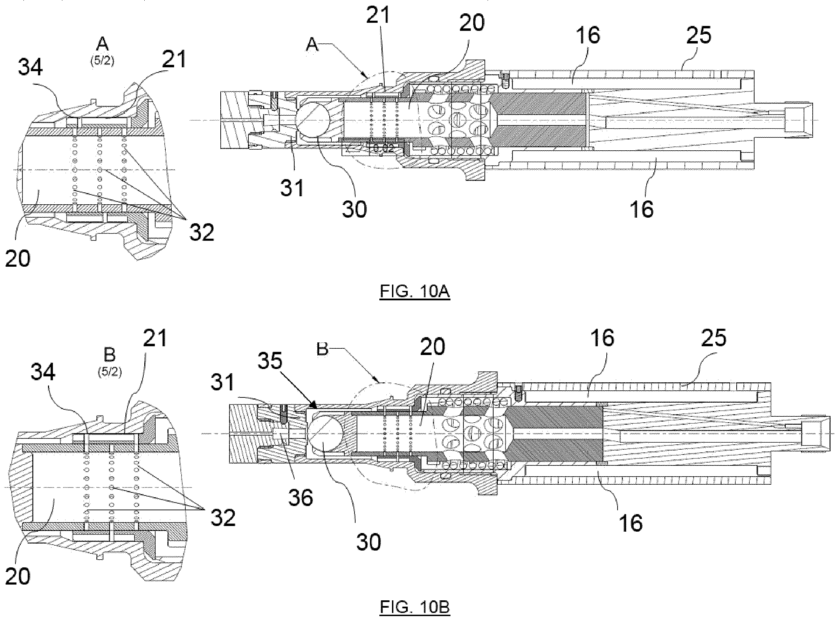

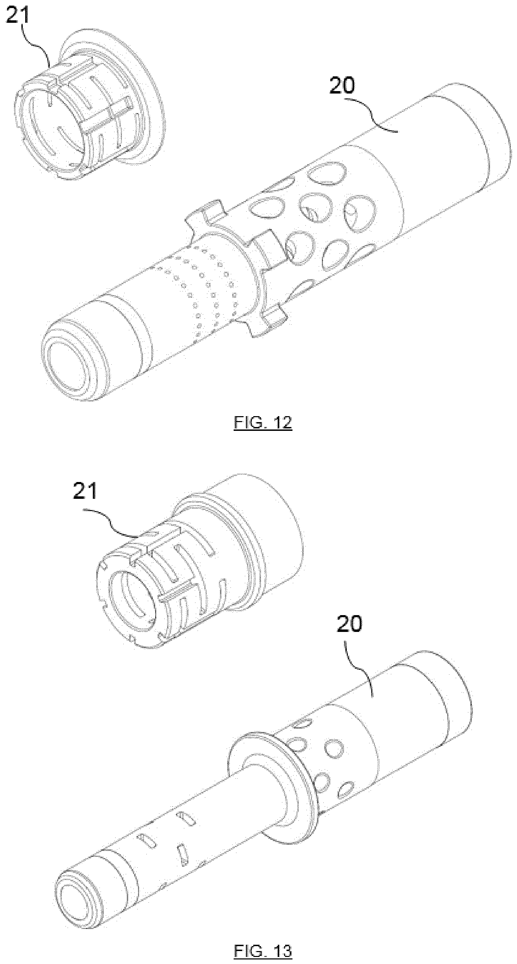

According to some embodiments depicted in FIG. 10A, 10B and 12, in addition to the above-mentioned axial ball-cone sealing, a second sealing, which is called a radial sealing, is provided. A series of holes are machined in the tubular part of the needle which is supporting the ball at its end, for example under the form of rows of orifices 32 disposed in axial planes. These holes are provided in the needle in the region thereof in contact with the bushing 21. Typically these holes or orifices 32 are circular orifices. Preferably the holes of 0.4-0.7 mm diameter are obtained by electro-erosion in a number of 50 per row.

The bushing 21 is provided on its turn with clearance axial slots 34 which are intended to cooperate with said orifices 32 of the needle 20 (FIG. 12). When the injector is closed, i.e. when the ball 30 is in contact with the nozzle seat 31 (FIG. 10A), the orifices 32 of the needle and the clearance slots 34 of the bushing do not match, i.e. are not in correspondence or aligned, and a double seal is assured, firstly at the ball/seat, and secondly radially at the needle/bushing contact region.

When the injector valve begins to open, or equivalently when the ball is going to be moved away from the seat, the orifices 32 and the clearance slots 34 match or are coming into alignment and the fluid goes out of the internal part of the needle towards the exit 36 communicating with the nozzle end through tubular channel 35, followed by the ball rising up from the nozzle seat (FIG. 10B).

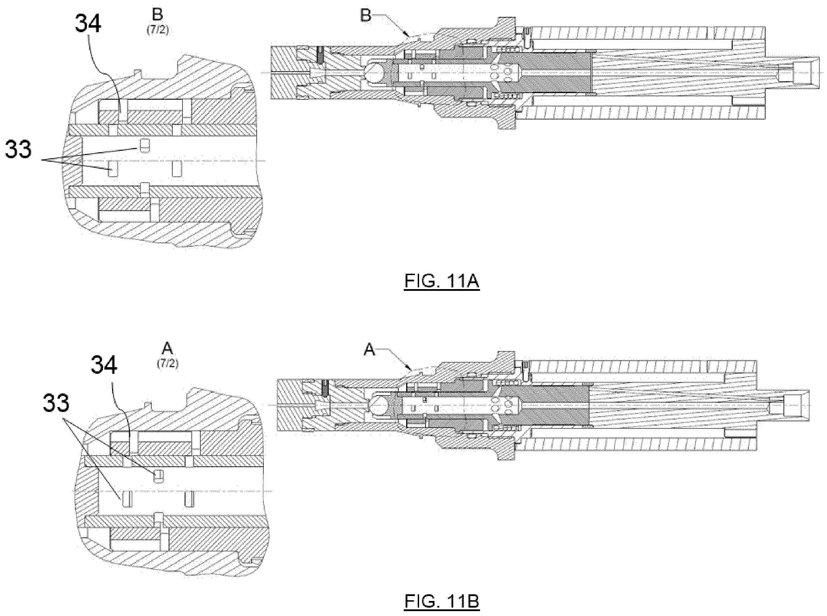

In one alternate embodiment, the orifices 32 in the needle are replaced by a number of slots 33. Typically a slot is an elongated and narrow opening or groove. The slots 33 have the same function as the orifices 32. Slots 33 are however easier to machine than orifices 32 (FIG. 11A, 11B and 13).

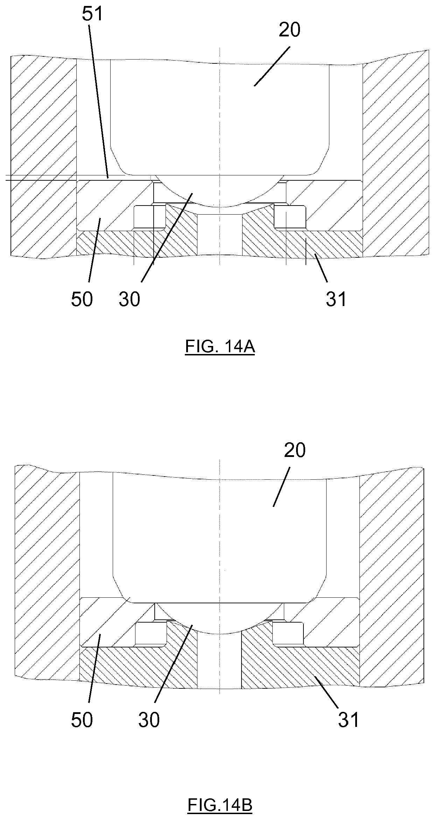

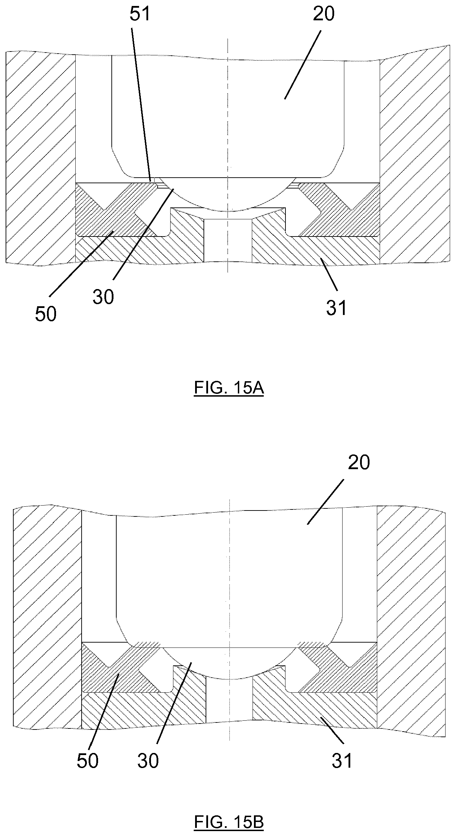

According to a still preferred embodiment, depicted on FIG. 14A, FIG. 14B, FIG. 15A, FIG. 15B and FIG. 16, a third sealing, i.e. a second axial sealing 51 can be obtained due to the contact between the needle 20, or the horizontal surface thereof, and a elastomer or polymer seal 50, the latter getting into deformation when the injector is closed (FIG. 14B and FIG. 15B). The seal 50 also allows to damp the closing event of the needle 20, and prevent the ball 30 and valve seat 31 system from hard shocks over the lifetime of the injector, preserving the "zero leakage" performances.

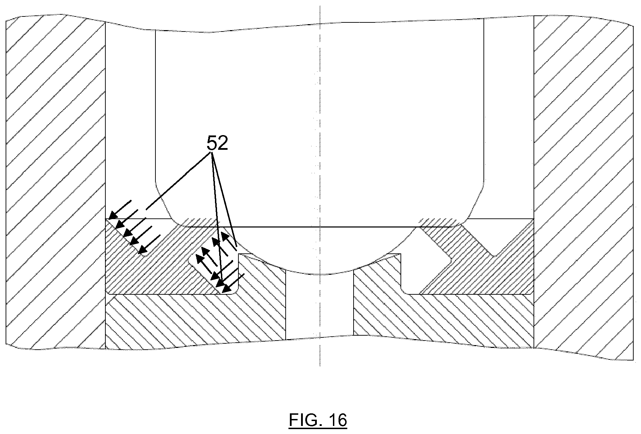

In the variant represented in FIG. 15A and FIG. 15B, the design additionally allows to use the hydrostatic pressure to keep the seal in his position. The pressure force vectors 52 (with injector closed, as in FIG. 15B) are visualized in FIG. 16.

Finally the elastomer or polymer seal 50 is always immersed in the gas media to be injected, preventing it to be melted owing to the high temperature conditions such those that can be reached inside the combustion chamber.

According one embodiment (not shown), the ball 30 is disposed free to move inside the needle 20 in order to prevent wear when the ball 30 enters into contact with the valve seat 31 when the injector is closed. Accordingly this is not always the same part of the ball 30 which contacts the valve seat 31, as the ball 30 is able to turn for example, and it prevents a wear under the form of a circle marking on the ball 20.

As far as the problem of homogeneous mixing of mixture air-CNG inside the combustion chamber and the problem of reduction of the dead volume of the nozzle head are considered, nozzle heads were designed according to some embodiments supported by CFD simulations and intended to be obtained by 3D-layer manufacturing. The manufacturing of these nozzles could also be performed by the technique of lost wax foundry.

An example of a generic nozzle head 11 according to the present invention is given in FIG. 14. In this nozzle head 11, multi-cone channels 40 of different angles are provided (in the example shown here a 3-cone nozzle head is provided). Advantageously, at each cone angle, interruptions 41 of the openings are provided for further reducing the dead volume of the nozzle head. The purpose is to obtain a gas conical jet of the highest possible diffusion angle, preferably up to 60° and more, possibly up to 180°. Advantageously the nozzle head will be made of titanium or stainless steel.

Preferably, the ratio between the output section area and the input section area of the nozzle head is about 3.

In FIG. 15, a number of simulations of gaseous fuel distribution are provided for a number of nozzle designs (further tested or to be tested) :
Family A : single cone, 30° diffusion angle ;
Family C : single cone, 35° angle and central channel ;
Family D : double cone, 35° diffusion angle ;
Family E : triple cone, 35° diffusion angle ;
Family G : triple cone, 40° diffusion angle.

The right column shows a transverse cross-sectional view of the nozzles, while the left column shows an axial cross-sectional view. Finally the two middle columns show related perspective views, according to two different view angle.

The three first nozzle designs (C6, D4 and F4) shown on FIG. 15 show rather uniform gas mixing. Note that in some double-cone and triple-cone solutions of FIG. 15 (D.4 and F.4), cone channels 40 and cone interruptions 41 are radially alternating. The three further designs (A.1, E.3 and G.4) however show a central gas "hole" detrimental to homogeneous gas distribution, and which is particularly pronounced in A1 design (single cone).

### List of reference symbols

- 1: injector
- 2: ignition spark plug
- 3: intake port or manifold
- 4: intake valve
- 5: exhaust port
- 6: exhaust valve
- 7: piston
- 8: combustion chamber
- 11: nozzle head
- 12: nozzle seal
- 13: nozzle
- 14: spring ring
- 15: spacer
- 16: solenoid (or coil)
- 17: connecting plug
- 18: wire length (according to application)
- 19: connector
- 20: needle (or plunger)
- 21: bushing
- 22: portion of the needle in contact with the bushing
- 23: portion of the needle in contact with the coil
- 24: portion of the coil in contact with the needle
- 25: fixed part of the injector supporting (or containing) the coil
- 26: middle area with smaller diameter
- 27: external areas with higher diameter
- 28: spring
- 30: ball
- 31: seat
- 32: holes of the needle (radial sealing)
- 33: slots of the needle (radial sealing)
- 34: slots of the bushing (radial sealing)
- 35: tubular channel
- 36: exit to nozzle head
- 40: multi-cone holes (channels)
- 41: multi-cone interruptions
- 50: elastomer or polymer seal
- 51: third sealing
- 52: hydrostatic forces on elastomer or polymer seal

## Claims

1. Inward gas injector (1) for direct injection of a gaseous fuel into a combustion chamber (8) of an internal combustion engine or a fuel cell, comprising a housing or injector body having a hollow nozzle (13) for containing a gas under pressure and ended by a nozzle head (11), said nozzle head (11) having a valve seat (31) communicating with the exterior by an exit (36) having at least one exit channel and a gas diffusion angle, a mobile valve member (30) connected to a needle (20) actuated by a coil (16) concentric with the hollow part of the nozzle (13), said needle (20) being therefore able to slide within the nozzle (13), said valve member (30) cooperating with the valve seat (31) to open or close the valve, and guiding means (21, 22, 23, 24) for guiding the sliding of the needle (20) in the nozzle, said guiding means comprising a first contact portion (22) between the needle (20) and a bushing (21) of the nozzle, and a second contact portion (23) between the needle (20) and the nozzle at the level of a portion of the coil (24), so that the clearance between the needle and the nozzle at said first contact portion (22) is 4 to 8 times lower than the clearance between the needle and the nozzle at said second contact portion (23), a first longitudinal sealing of the valve being ensured by the valve member (30) contacting the valve seat (31), **characterised in that** a second radial sealing of the valve is ensured by a plurality of orifices (32) or needle slots (33) made in a portion of the needle (20), said portion of the needle (20) being hollow and containing the gas under pressure, said plurality of orifices (32) or needle slots (33) cooperating with a plurality of slots (34) made in the bushing (21), so that, when the valve member (30) is in contact with the valve seat (31), the orifices (32), the needle slots (33) respectively, do not match the bushing slots (34), leading to a radial sealing and when the valve member (30) is not in contact with the valve seat (31), at least part of the orifices (32), the needle slots (33) respectively, do match the bushing slots (34), leading to a flow of gas to the exterior of the injector through a channel (35) connecting the bushing slots (34) and the exit of the nozzle head (36).

2. Inward gas injector according to claim 1, wherein the needle (20) is made of stainless steel and the bushing (21) is made of a copper alloy.

3. Inward gas injector according to claim 1, wherein said valve member (30) is a ball and said valve seat (31) has a conical surface.

4. Inward gas injector according to claim 1, wherein said plurality of orifices (32) or needle slots (33) are disposed in rows perpendicular to the axis of the nozzle (13).

5. Inward gas injector according to claim 1, wherein the portion of the needle (20) in contact with the nozzle at the first contact portion (22) and the portion of the needle (20) in contact with the nozzle at the second contact portion (23) are each cylindrical parts comprising a central area (26) having a first diameter bordered by two external areas (27) having each a same second diameter, said first diameter being lower than said second diameter.

6. Inward gas injector according to claim 1, wherein said nozzle head (11) is interchangeable and has an exit (36) to the exterior of the nozzle comprising a plurality of exit channels (40) forming an envelope gas diffusion angle.

7. Inward gas injector according to claim 6, wherein the exit channels (40) of the nozzle head (11) are apportioned according to one or more cones, said exit channels (40) belonging to a same cone being separated by channel interruptions (41).

8. Inward gas injector according to claim 6, wherein said nozzle head (11) is CFD-simulated and further manufactured by 3D-layer manufacturing.

9. Inward gas injector according to claim 7, wherein the channels (40) of the nozzle head (11) are apportioned according to 2 or 3 coaxial cones.

10. Inward gas injector according to claim 7, wherein the nozzle head (11) further comprises an axial channel (40).

11. Inward gas injector according to claim 1, wherein a third sealing (51) of the valve is ensured by an elastomer or polymer seal (50) located between the valve seat (31) and a horizontal surface of the needle (20), so as the elastomer or polymer seal (50) gets into deformation when contacting the horizontal surface of the needle (20) when the injector is closed.

12. Inward gas injector according to claim 1, wherein the ball (30) is disposed free to move inside the needle (20) in order to prevent wear when the ball (30) enters into contact with the valve seat (31) when the injector is closed.

13. A gas-operated internal combustion engine or a fuel cell, comprising an inward gas injector according to any one of the preceding claims.

## Patentansprüche

1. Nach innen öffnender Gasinjektor (1) zur Direkteinblasung eines gasförmigen Brennstoffs in eine Brennkammer (8) eines Verbrennungsmotors oder einer Brennstoffzelle, umfassend ein Gehäuse oder einen Injektorkörper mit einer hohlen Düse (13), die dazu bestimmt ist, ein unter Druck stehendes Gas zu enthalten, und die durch einen Düsenkopf (11) abgeschlossen ist, wobei der Düsenkopf (11) einen Ventilsitz (31) aufweist, der über einen Ausgang (36) mit der Außenseite in Verbindung steht, wobei der Ausgang mindestens Folgendes aufweist: einen Ausgangskanal und einen Gasdiffusionswinkel, ein bewegliches Ventilelement (30), das mit einer Nadel (20) verbunden ist, die durch eine Spule (16) betätigt ist, welche konzentrisch mit dem hohlen Teil der Düse (13) ist, wobei die Nadel (20) daher in der Lage ist, innerhalb der Düse (13) zu gleiten, wobei das Ventilelement (30) mit dem Ventilsitz (31) zusammenwirkt, um das Ventil zu öffnen oder zu schließen, und Führungsmittel (21, 22, 23, 24), um das Gleiten der Nadel (20) in der Düse zu führen, wobei die Führungsmittel einen ersten Kontaktabschnitt (22) zwischen der Nadel und einer Buchse (21) der Düse, und einen zweiten Kontaktabschnitt (23) zwischen der Nadel (20) und der Düse an einem Abschnitt der Spule (24) umfassen, so dass der Spielraum zwischen der Nadel und der Düse an dem ersten Kontaktabschnitt (22) 4 bis 8 Mal geringer als der Spielraum zwischen der Nadel und der Düse an dem zweiten Kontaktabschnitt (23) ist, wobei eine erste längs gerichtete Dichtung des Ventils durch das Ventilelement (30), das mit dem Ventilsitz (31) in Kontakt ist, gewährleistet wird, **dadurch gekennzeichnet, dass** eine zweite radiale Dichtung des Ventils durch eine Vielzahl von Öffnungen (32) oder Nadelschlitzen (33), hergestellt in einem Abschnitt der Nadel (20), gewährleistet ist, wobei der Abschnitt der Nadel (20) hohl ist und das unter Druck stehende Gas enthält, wobei die Vielzahl von Öffnungen (32) oder Nadelschlitzen (33) mit einer Vielzahl von Schlitzen (34), die in der Buchse (21) hergestellt sind, zusammenwirkt, so dass, wenn das Ventilelement (30) mit dem Ventilsitz (31) in Kontakt ist, die Öffnungen (32) bzw. die Nadelschlitze (33) nicht zu den Buchseschlitzen (34) passen, was zu einer radialen Dichtung führt, und wenn das Ventilelement (30) nicht mit dem Ventilsitz (31) in Kontakt ist, mindestens ein Teil der Öffnungen (32) bzw. der Nadelschlitze (33) sehr wohl zu den Buchsenschlitzen (34) passen, was zu einem Gasstrom zur Außenseite des Injektors über einen Kanal (35), der die Buchsenschlitze (34) und den Ausgang des Düsenkopfs (36) verbindet, führt.

2. Nach innen öffnender Gasinjektor nach Anspruch 1, wobei die Nadel (20) aus rostfreiem Stahl hergestellt ist und die Buchse (21) aus einer Kupferlegierung hergestellt ist.

3. Nach innen öffnender Gasinjektor nach Anspruch 1, wobei das Ventilelement (30) ein Ball ist und der Ventilsitz (31) eine konische Oberfläche aufweist.

4. Nach innen öffnender Gasinjektor nach Anspruch 1, wobei die Vielzahl von Öffnungen (32) oder Nadelschlitzen (33) in Reihen senkrecht zur Achse der Düse (13) angeordnet ist.

5. Nach innen öffnender Gasinjektor nach Anspruch 1, wobei der Abschnitt der Nadel (20) in Kontakt mit der Düse am ersten Kontaktabschnitt (22) und der Abschnitt der Nadel (20) in Kontakt mit der Düse am zweiten Kontaktabschnitt (23) jeweils zylindrische Teile sind, die einen zentralen Bereich (26) mit einem ersten Durchmesser umfassen, an den zwei externe Bereiche (27) mit jeweils einem gleichen zweiten Durchmesser angrenzen, wobei der erste Durchmesser kleiner als der zweite Durchmesser ist.

6. Nach innen öffnender Gasinjektor nach Anspruch 1, wobei der Düsenkopf (11) austauschbar ist und einen Ausgang (36) zur Außenseite der Düse aufweist, der eine Vielzahl von Ausgangskanälen (40) umfasst, die einen Hüllgas-Diffusionswinkel bilden.

7. Nach innen öffnender Gasinjektor nach Anspruch 6, wobei die Ausgangskanäle (40) des Düsenkopfs (11) gemäß einem oder mehreren Kegeln aufgeteilt sind, wobei die Ausgangskanäle (40) zu demselben Kegel gehören, der durch Kanalunterbrechungen (41) getrennt ist.

8. Nach innen öffnender Gasinjektor nach Anspruch 6, wobei der Düsenkopf (11) CFD-simuliert ist und weiter durch 3D-Schicht-Herstellung produziert ist.

9. Nach innen öffnender Gasinjektor nach Anspruch 7, wobei die Kanäle (40) des Düsenkopfs (11) gemäß 2 oder 3 koaxialen Kegeln aufgeteilt sind.

10. Nach innen öffnender Gasinjektor nach Anspruch 7, wobei der Düsenkopf (11) weiter einen axialen Kanal (40) umfasst.

11. Nach innen öffnender Gasinjektor nach Anspruch 1, wobei eine dritte Abdichtung (51) des Ventils durch eine Elastomer- oder Polymerdichtung (50) gewährleistet ist, die sich zwischen dem Ventilsitz (31) und einer horizontalen Oberfläche der Nadel (20) befindet, so dass die Elastomer- oder Polymerdichtung (50) verformt wird, wenn sie mit der horizontalen Oberfläche der Nadel (20) in Kontakt kommt, wenn der Injektor geschlossen ist.

12. Nach innen öffnender Gasinjektor nach Anspruch 1, wobei der Ball (30) frei beweglich innerhalb der Nadel (20) angeordnet ist, um eine Abnutzung zu verhindern, wenn der Ball (30) mit dem Ventilsitz (31) in Kontakt kommt, wenn der Injektor geschlossen ist.

13. Gasbetriebener Verbrennungsmotor oder Brennstoffzelle, der einen nach innen öffnenden Gasinjektor nach einem der vorhergehenden Ansprüche umfasst.

## Revendications

1. Injecteur de gaz s'ouvrant vers l'intérieur (1) pour l'injection directe d'un combustible gazeux dans une chambre de combustion (8) d'un moteur à combustion interne ou d'une pile à combustible, comprenant un boîtier ou corps d'injecteur présentant une buse creuse (13) pour contenir un gaz sous pression et se terminant par une tête de buse (11), ladite tête de buse (11) présentant un siège de soupape (31) communiquant avec l'extérieur par une sortie (36) présentant au moins un canal de sortie et un angle de diffusion de gaz, un élément de soupape mobile (30) raccordé à une aiguille (20) actionnée par une bobine (16) concentrique avec la partie creuse de la buse (13), ladite aiguille (20) pouvant par conséquent coulisser à l'intérieur de la buse (13), ledit élément de soupape (30) coopérant avec le siège de soupape (31) pour ouvrir ou fermer la soupape, et des moyens de guidage (21, 22, 23, 24) pour guider le coulissement de l'aiguille (20) dans la buse, lesdits moyens de guidage comprenant une première partie de contact (22) entre l'aiguille (20) et une bague (21) de la buse, et une seconde partie de contact (23) entre l'aiguille (20) et la buse au niveau d'une partie de la bobine (24), de sorte que le jeu entre l'aiguille et la buse au niveau de ladite première partie de contact (22) est de 4 à 8 fois inférieur au jeu entre l'aiguille et la buse au niveau de ladite seconde partie de contact (23), une première étanchéité longitudinale de la soupape étant garantie par l'élément de soupape (30) en contact avec le siège de soupape (31), **caractérisé en ce qu'**une deuxième étanchéité radiale de la soupape est garantie par une pluralité d'orifices (32) ou fentes d'aiguille (33) réalisés dans une partie de l'aiguille (20), ladite partie de l'aiguille (20) étant creuse et contenant le gaz sous pression, ladite pluralité d'orifices (32) ou de fentes d'aiguille (33) coopérant avec une pluralité de fentes (34) réalisées dans la bague (21), de sorte que lorsque l'élément de soupape (30) est en contact avec le siège de soupape (31), les orifices (32), les fentes d'aiguille (33) respectivement, ne correspondent pas aux fentes de la bague (34), conduisant à une étanchéité radiale, et lorsque l'élément de soupape (30) n'est pas en contact avec le siège de soupape (31), au moins une partie des orifices (32), des fentes d'aiguille (33) respectivement, correspondent aux fentes de la bague (34), menant à un écoulement du gaz vers l'extérieur de l'injecteur par un canal (35) raccordant les fentes de la bague (34) et la sortie de la tête de buse (36).

2. Injecteur de gaz s'ouvrant vers l'intérieur selon la revendication 1, dans lequel l'aiguille (20) est réalisée à partir d'acier inoxydable et la bague (21) est réalisée à partir d'un alliage de cuivre.

3. Injecteur de gaz s'ouvrant vers l'intérieur selon la revendication 1, dans lequel ledit élément de soupape (30) est une bille et ledit siège de soupape (31) a une surface conique.

4. Injecteur de gaz s'ouvrant vers l'intérieur selon la revendication 1, dans lequel ladite pluralité d'orifices (32) ou de fentes d'aiguille (33) sont disposés en rangées perpendiculaires à l'axe de la buse (13).

5. Injecteur de gaz s'ouvrant vers l'intérieur selon la revendication 1, dans lequel la partie de l'aiguille (20) en contact avec la buse au niveau de la première partie de contact (22) et la partie de l'aiguille (20) en contact avec la buse au niveau de la seconde partie de contact (23) sont chacune des parties cylindriques comprenant une zone centrale (26) ayant un premier diamètre bordé par deux zones externes (27) présentant chacune un même second diamètre, ledit premier diamètre étant inférieur audit second diamètre.

6. Injecteur de gaz s'ouvrant vers l'intérieur selon la revendication 1, dans lequel ladite tête de buse (11) est interchangeable et présente une sortie (36) vers l'extérieur de la buse comprenant une pluralité de canaux de sortie (40) formant un angle de diffusion de gaz d'enveloppe.

7. Injecteur de gaz s'ouvrant vers l'intérieur selon la revendication 6, dans lequel les canaux de sortie (40) de la tête de buse (11) sont répartis selon un ou plusieurs cônes, lesdits canaux de sortie (40) appartenant à un même cône qui est séparé par des interruptions de canal (41).

8. Injecteur de gaz s'ouvrant vers l'intérieur selon la revendication 6, dans lequel ladite tête de buse (11) est simulée par CFD et ensuite fabriquée par une fabrication en couche 3D.

9. Injecteur de gaz s'ouvrant vers l'intérieur selon la revendication 7, dans lequel les canaux (40) de la tête de buse (11) sont répartis selon 2 ou 3 cônes coaxiaux.

10. Injecteur de gaz s'ouvrant vers l'intérieur selon la revendication 7, dans lequel la tête de buse (11) comprend en outre un canal axial (40).

11. Injecteur de gaz s'ouvrant vers l'intérieur selon la revendication 1, dans lequel une troisième étanchéité (51) de la soupape est garantie par un joint d'étanchéité élastomère ou polymère (50) positionné entre le siège de soupape (31) et une surface horizontale de l'aiguille (20), de sorte que le joint d'étanchéité élastomère ou polymère (50) se déforme lors du contact avec la surface horizontale de l'aiguille (20) lorsque l'injecteur est fermé.

12. Injecteur de gaz s'ouvrant vers l'intérieur selon la revendication 1, dans lequel la bille (30) est disposée pour se déplacer librement à l'intérieur de l'aiguille (20) afin d'empêcher l'usure quand la bille (30) entre en contact avec le siège de soupape (31) lorsque l'injecteur est fermé.

13. Moteur à combustion interne fonctionnant au gaz ou pile de combustible, comprenant un injecteur de gaz s'ouvrant vers l'intérieur selon l'une quelconque des revendications précédentes.
